# EUROPÄISCHE PATENTSCHRIFT

(11) **EP 2 757 263 B1**
(45) Veröffentlichungstag und Bekanntmachung des Hinweises auf die Patenterteilung: **06.04.2016**
(21) Anmeldenummer: 14151541.1
(22) Anmeldetag: 17.01.2014
(51) Int. Cl.: F04B 23/02, F16C 33/66, F16N 7/32, F16N 7/38, F16N 29/00

(54) **Vorrichtung zur dosierten Abgabe enes Fluids, sowie Gerät und Verfahren mit einer solchen Vorrichtung**
Device for the metered dispensing of a fluid, and device and method using such a device
Dispositif de distribution dosée d'un fluide et appareil et procédé dotés d'un tel dispositif

(30) Priorität: 21.01.2013 DE 102013100559
(43) Veröffentlichungstag der Anmeldung: 23.07.2014
(73) Patentinhaber: Allmendinger Elektromechanik KG, 73337 Bad Überkingen/Hausen (DE)
(72) Erfinder: Allmendinger, Hermann, 73337 Bad Überkingen (DE)
(74) Vertreter: Baur & Weber Patentanwälte

(56) Entgegenhaltungen:
- EP-A2- 1 496 302
- DE-A1-102004 034 689
- DE-T2- 69 433 065
- DE-U1-202011 000 700

## Beschreibung

Die Erfindung betrifft eine Vorrichtung zur dosierten Abgabe eines Fluids sowie ein Gerät und ein Verfahren mit einer solchen Vorrichtung.

Für die Schmierung von Werkzeugen oder von Lagerungen von relativ zueinander beweglich gelagerten Teilen mechanischer Geräte ist es bekannt, den Werkzeugen bzw. Lagerungen fortwährend geringe Mengen von Schmiermittel zuzuführen, insbesondere bei der Öl-Luft-Schmierung. Zur Schmiermittelförderung können z. B. Mikro-Verdrängerpumpen eingesetzt werden. Hierbei ist eine genaue Dosierung und eine kontinuierliche Schmiermittelzuführung und eine Kontrolle des Schmiermittelflusses von besonderer Bedeutung. Eine Kontrolle des Schmiermittelflusses durch herkömmliche Strömungsmesser, wie Flügelrad oder Wellenreflexion, ist bei den geringen Zuführungsraten von z. B. weniger als 250 µl je Stunde nicht mehr hinreichend zuverlässig. Bekannt ist bei Öl-Luft-Schmierungen der Einsatz von Mikro-Verdrängungspumpen. Das von diesen geförderte Öl wird in eine Luft führende Leitung eingespeist. Für die Zuführung des Schmiermittels zu der zu schmierenden Stelle kann das Schmiermittel fein vernebelt werden.

Mikro-Verdrängungspumpen sind z. B. aus der DE 102 38 600 A1, der DE 36 18 106 A1 oder der DE 195 46 570 C1 mit aktiven piezoelektrischen Pumpelementen in der Fluidkammer bekannt. Ein- und Auslassöffnungen können durch eine flexible Membran verschließbar sein, welche durch das aktive Pumpelement oder durch zusätzliche Piezowandler betätigbar ist. In der EP 1 369 587 A2 ist eine Mikro-Verdrängungspumpe mit einem piezoelektrischen Pumpelement beschrieben, bei welchem der Einlass durch ein Klappen-Rückschlagventil verschließbar ist.

Die DE 10 2005 055 697 B4 beschreibt eine Vorrichtung zur Dosierung eines Fluids, insbesondere für eine Minimalmengendosierung eines Schmiermittels in einer Öl-Luft-Schmierung. Bei dieser bekannten Vorrichtung ist eine Fluidkammer, welche keine eigenen aktiven Pumpelemente aufweist über ein Einlassventil mit einer Fluidquelle und über ein Auslassventil mit einer Fluidsenke verbindbar. Eine Steuereinrichtung schaltet Einlassventil und Auslassventil zeitlich nicht überlappend.

Aus der DE 20 2011 000700 U1 ist eine Dosiervorrichtung zum Abgeben einer vorbestimmten Schmiermittelmenge mit folgenden Merkmalen bekannt: einem Schmiermittelreservoir, das ausgebildet ist, ein Schmiermittel aufzunehmen und über einen Auslass des Schmiermittelreservoirs unter Druck abzugeben; und ein Mikroventil, das mit dem Auslass des Schmiermittelreservoirs strömungsmässig gekoppelt ist und ausgebildet ist, um die vorbestimmte Schmiermittelmenge definiert abzugeben.

In der DE 694 33 065 T2 ist ein Wälzlager mit einem externen Schmiermittelversorgungssystem beschrieben, das einen Schmiermittelkanal umfasst, der sich durch den Außenring oder Innenring des Lagers erstreckt und in unmittelbarer Nähe der Rollelemente des Lagers endet.

Der vorliegenden Erfindung liegt die Aufgabe zugrunde, eine präzis und zuverlässig arbeitende Vorrichtung zur dosierten Abgabe eines Fluids und ein Gerät mit einer solchen Vorrichtung anzugeben.

Erfindungsgemäße Lösungen sind in den unabhängigen Ansprüchen beschrieben. Die abhängigen Ansprüche enthalten vorteilhafte Ausgestaltungen der Erfindung.

Die erfindungsgemäße Vorrichtung ist durch den Einsatz nur eines steuerbaren Ventils als Einlassventil und durch eine permanent geöffnete Ausgangsöffnung besonders einfach aufgebaut und mittels der Steuereinrichtung dennoch flexibel steuerbar und überwachbar. Die permanent geöffnete Ausgangsöffnung mit dem gegenüber der Öffnung des Einlassventils großen Strömungswiderstand für das Fluid führt zu einer zeitlichen Glättung der Rate abgegebener Schmiermittelmenge.

Durch den größeren Strömungswiderstand für das Fluid durch die Ausgangsöffnung gegenüber einer Einlassöffnungsöffnung durch das geöffnete Einlassventil kann die Fluidkammer bei geöffnetem Einlassventil mit Fluid bei ansteigendem Fluiddruck aufgeladen werden, welches nach Schließen des Einlassventils bei wieder absinkendem Fluiddruck mit abnehmender Rate durch die Ausgangsöffnung austritt. Fluid tritt auch bei geöffnetem Einlassventil durch die Ausgangsöffnung aus, wobei dann die Rate abgegebenen Schmiermittels mit ansteigendem Fluiddruck in der Fluidkammer zunimmt. An der Ausgangsöffnung tritt dadurch im Wesentlichen permanent Fluid aus, dessen Austrittsrate periodisch mit der Umschaltung des Einlassventils abnimmt und zunimmt. Das Fluid ist vorzugsweise ein ölartiges Schmiermittel.

Der Strömungswiderstand der Ausgangsöffnung für das Fluid beträgt vorteilhafterweise wenigstens das 2-fache, insbesondere wenigstens das 4-fache des Strömungswiderstands durch das Einlassventil in dessen Öffnungsstellung.

Das Einlassventil ist vorzugsweise als nur zwischen der Öffnungsstellung und der Schließstellung umschaltbares Schaltventil ohne einstellbare Zwischenstellung ausgebildet. In erster vorteilhafter Ausgestaltung ist eine Fluidverbindung zwischen einer das Fluid mit einem hohen Druck von beispielsweise 4-6 bar bereitstellenden Fluidquelle und der Fluidkammer bei in Schließstellung befindlichem Einlassventil vollständig gesperrt. Der Fluid-Druck der Fluidquelle kann in vorteilhafter Weiterbildung veränderlich steuerbar sein, wodurch die über eine Periode gemittelte Strömungsrate des Fluids durch die Ausgangsöffnung gleichfalls beeinflussbar ist. In anderer Ausführung kann auch bei in Schließstellung befindlichem Einlassventil ein Bypass-Strömungspfad zwischen Fluidquelle und Fluidkammer gegeben sein, dessen Strömungswiderstand für das Fluid vorzugsweise größer ist als der Strömungswiderstand der Ausgangsöffnung. Ein solcher Bypass-Strömungspfad, welcher durch das Einlassventil oder getrennt von diesem verlaufen kann, bewirkt einen Mindestdruck in der Fluidkammer und eine Mindestfließrate des Fluids aus der Ausgangsöffnung, auch wenn wegen eines Defekts des Einlassventils dieses länger als beabsichtigt geschlossen bleibt.

Die Ausgangsöffnung ist in bevorzugter Ausführung durch eine Ringspaltdüse gebildet, bei welcher der Innenkörper und/oder der mit diesem den Düsenkanal begrenzende Außenkörper eine konische Wandung aufweisen, und bei welcher präzise hohe Strömungswiderstände einstellbar sind.

Die Steuereinrichtung kann das Einlassventil mit gleichbleibendem Tastverhältnis von Öffnungsdauer zu Schließdauer umschalten. Die Drucksensoranordnung dient dann primär zur Überwachung der ordnungsgemäßen Funktion der Dosiervorrichtung in der Steuereinrichtung.

In bevorzugter Ausführung steuert die Steuereinrichtung das periodische Öffnen und Schließen des Einlassventils nach Maßgabe eines in der Drucksensoranordnung erzeugten und der Steuereinrichtung zugeleiteten DruckSensorsignals variabel. Die Drucksensoreinrichtung kann in vorteilhafter einfacher Ausführung zur Überwachung einer oberen und/oder einer unteren Druckschwelle des Fluiddrucks in der Fluidkammer eingerichtet sein und bei Überschreiten der oberen Druckschwelle bzw. Unterschreiten der unteren Druckschwelle ein auswertbares Signal, welches auch nur in Form einer Umschaltflanke eines elektrischen Signals gegeben sein kann, erzeugen. In erster einfacher Ausführung kann dann die Steuereinrichtung in erster vorgebbarer zeitlicher Zuordnung zu einer durch ein Drucksensorsignal angezeigten Überschreitung einer oberen Druckschwelle das Einlassventil in die Schließstellung und/oder in zweiter vorgebbarer zeitlicher Zuordnung zur Unterschreitung einer unteren Druckschwelle das Einlassventil in die Öffnungsstellung umschalten. Als vorgebbare zeitliche Zuordnungen seien dabei verstanden, dass ein Umschalten des Einlassventils zum Zeitpunkt des Überschreitens der oberen Druckschwelle bzw. Unterschreiten der unteren Druckschwelle oder mit einer vorgebbaren zeitlichen Verzögerung dazu erfolgt.

Die Steuereinrichtung kann sowohl zur Funktionsüberwachung der Dosiervorrichtung als auch zur variablen Ansteuerung des Einlassventils die Zeitabstände von Überschreiten der oberen Druckschwelle und Unterschreiten der unteren Druckschwelle auswerten.

In vorteilhafter Weiterbildung kann die Drucksensoranordnung dazu eingerichtet sein, mehr als zwei Druckwerte zu unterscheiden und entsprechend mehr unterscheidbare Drucksensorsignale der Steuereinrichtung zuzuleiten, so dass auch komplexere Zeitverläufe des Fluiddrucks erfassbar und zur Funktionskontrolle und/oder zur Steuerung des Einlassventils auswertbar sind.

Bei der Erfindung wird in vorteilhafter Weise ähnlich der DE 10 2005 055 697 B4 eine druckabhängige reversible Variation der in der Fluidkammer enthaltenen Masse an Fluid ausgenutzt. Neben einer Kompressibilität des Fluids, welche insbesondere bei Schmierölen aber typischerweise sehr gering ist, ist vor allem ein in Abhängigkeit vom Fluiddruck veränderliches Volumen der Fluidkammer von Bedeutung. Für die angestrebte präzise Dosierung sehr kleiner Mengen beträgt die Veränderbarkeit des Kammervolumens zwischen dem minimalen Fluiddruck, welcher insbesondere auch annähernd gleich dem Umgebungs-Luftdruck sein kann, und dem durch die Fluidquelle bestimmten maximalen Fluiddruck maximal 0,5 %, insbesondere maximal 0,25 %, vorzugsweise maximal 0,1 % des kleineren Kammervolumens. Die druckabhängige Veränderbarkeit des Kammervolumens beträgt vorteilhafterweise weniger als 1 mm³, insbesondere weniger als 0,5 mm³

Eine Veränderbarkeit des Kammervolumens allein durch passive Komponenten kann durch bereits in der DE 10 2005 055 697 B4 genannte konstruktive Ausbildungen der Fluidkammer gegeben sein. Vorzugsweise ist die Veränderbarkeit des Kammervolumens zumindest zu mehr als 50 %, insbesondere mehr als 80 % durch eine druckabhängige Verlagerung einer Komponente der Drucksensoranordnung, insbesondere der druckabhängigen Verformung einer dem Fluid in der Fluidkammer zu weisenden Sensormembran gegeben.

Die Taktfrequenz, mit welcher die Steuereinrichtung das Einlassventil periodisch umschaltet, beträgt vorteilhafterweise wenigstens 0,05 Hz, insbesondere wenigstens 0,1 Hz, vorzugsweise wenigstens 0,2 Hz. Die Taktfrequenz ist vorteilhafterweise nicht höher als 20 Hz, insbesondere nicht höher als 10 Hz, vorzugsweise nicht höher als 5 Hz. Das Tastverhältnis als Anteil der Dauer der Schließstellung an der Periodenlänge beträgt vorteilhafterweise wenigstens 5 %, insbesondere wenigstens 10 %, vorzugsweise wenigstens 20 %. Das Tastverhältnis ist vorteilhafterweise nicht größer als 80 %, insbesondere nicht größer als 66 %, vorzugsweise nicht größer als 50 %.

Die Dosiervorrichtung ist insbesondere vorteilhaft verwendbar in einem wenigstens eine Schmierstelle aufweisenden Gerät oder einem Verfahren zur kontinuierlichen Versorgung einer Schmierstelle mit sehr geringen Mengen von Schmiermitteln. Schmierstellen können Arbeitsbereiche von Werkzeugen, beispielsweise materialabtragenden Werkzeugen oder insbesondere Lager sein. Verfahren zur kontinuierlichen Versorgung von Schmierstellen mit geringen Mengen von Schmiermitteln können insbesondere Verfahren der Öl-Luft-Schmierung beinhalten. Die Ausgangsöffnung mündet dabei vorteilhafterweise in eine luftdurchströmte Leitung, entlang von deren Wand das Schmiermittel durch den Luftstrom in Schlieren mitgezogen wird.

Weitere vorteilhafte Anwendungen können im Bereich der Chemie oder insbesondere in der Medizin, dort bevorzugt in der Dosierung der Medikamentenzuführung gegeben sein.

Von der Fluidkammer können auch mehrere Ausgangsöffnungen zu getrennten Fluidsenken weg führen.

Die Erfindung ist nachfolgend anhand bevorzugter Ausführungsbeispiele unter Bezugnahme auf die Abbildungen noch eingehend veranschaulicht. Dabei zeigt:
- Fig. 1: einen schematischen Aufbau einer Dosiervorrichtung,
- Fig. 2: einen Zeitverlauf des Fluiddrucks,
- Fig. 3: Verläufe von Signalen.

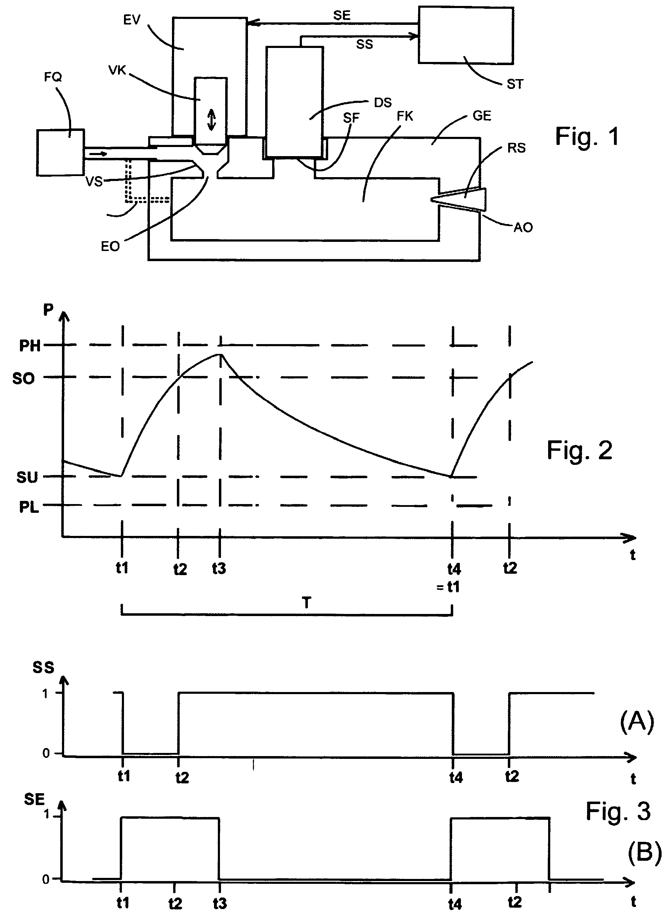

Fig. 1 zeigt in schematischer Darstellung einen vorteilhaften Aufbau einer erfindungsgemäßen Dosiervorrichtung. Hierbei ist eine Fluidkammer FK in einem Gehäuse GE ausgebildet. Über eine Einlassöffnung EO kann ein Fluid, insbesondere ein ölartiges Schmiermittel, von einer Fluidquelle unter einem hohen Druck in die Fluidkammer FK eingeleitet werden. Die Fluidkammer weist eine Ausgangsöffnung AO auf, welche in bevorzugter Ausführung durch eine Ringspaltdüse RS gebildet ist. Der Strömungswiderstand der Einlassöffnung EO sei kleiner als der Strömungswiderstand der Auslassöffnung AO angesehen. Die Einlassöffnung EO ist durch ein schaltbares Einlassventil EV verschließbar, indem ein Verschlusskörper VK relativ zu einer Ventilsitzfläche VS verschoben werden kann. Das Einlassventil EV sei von einer Steuereinrichtung ST über ein Ventilsteuersignal SE ansteuerbar, um den Verschlusskörper VK zwischen der in Fig. 1 dargestellten Öffnungsstellung und einer Schließstellung, in welcher der Ventilkörper VK an der Ventilsitzfläche VS anliegt und die Eintrittsöffnung EO verschließt, verschiebbar ist. Die Verschiebung des Verschlusskörpers VK kann in an sich gebräuchlicher Weise, insbesondere elektromagnetisch, hydraulisch oder pneumatisch erfolgen. An dem Gehäuse GE ist ferner eine Drucksensoranordnung DS angeordnet, welche mit einer der Fluidkammer FK zugewandten Sensorfläche zur Erfassung des Drucks von in der Fluidkammer FK befindlichem Fluid ausgebildet ist. Ein in der Drucksensoranordnung DS gewonnenes Sensorsignal SS ist der Steuereinrichtung ST zugeleitet und kann in dieser ausgewertet werden, insbesondere um Fehlfunktionen der Dosiervorrichtung zu erkennen und/oder um über eine Variation des Ventilsteuersignals SE die Ansteuerung des Einlassventils EV adaptiv nachzuführen.

Die Drucksensoranordnung DS kann in erster einfacher Ausführung zur Erfassung von Schwellüberschreitungen des Fluiddrucks in der Fluidkammer FK ausgebildet sein, insbesondere zur Erfassung des Erreichens oder Überschreitens einer oberen Druckschwelle SO und/oder des Erreichens oder Unterschreitens einer unteren Druckschwelle SU, welche in dem Diagramm nach Fig. 2 eingetragen sind.

In bevorzugter Ausführung kann die Fluidkammer FK als Sacklochbohrung in einem das Gehäuse GE bildenden Metallblock ausgeführt sein. Über Querbohrungen sind das Einlassventil EV und die Drucksensoranordnungen an dem Gehäuse GE befestigt. In die Öffnung der Sacklochbohrung ist die Ringspaltdüse RS eingesetzt. Das Kammervolumen der Fluidkammer beträgt vorteilhafterweise weniger als 1 cm³.

In dem Diagramm nach Fig. 2 ist der Fluiddruck P über der Zeit T aufgetragen. Mit PH sei hierbei ein Maximaldruck bezeichnet, welcher beispielsweise durch den Fluiddruck der Fluidquelle FQ gegeben sein kann. Ein Minimaldruck PL sei durch den Druck außerhalb der Fluidkammer bei der Auslassöffnung AO bestimmt. Mit durchgezogener gekrümmter Linie ist in Fig. 2 ein beispielhafter Verlauf des Fluiddrucks in der Fluidkammer FK dargestellt. Dabei sei für die Darstellung nach Fig. 2 von einer periodischen Arbeitsweise der Vorrichtung mit einer Periodendauer T ausgegangen. Der Beginn einer Arbeitsperiode ist mit dem Zeitpunkt t1 bezeichnet und sei in dem dargestellten Beispiel ausgelöst durch das Absinken des Fluiddrucks in der Fluidkammer FK auf den unteren Schwellwert SU. Die Drucksensoranordnung sei dabei als reiner Schwellwertsensor ausgebildet, welcher nur ein binäres Sensorsignal SS liefert, dessen beide Signalwerte in Fig. 3 (A) mit 0 und 1 bezeichnet sind. In analoger Weise ist das Ventilsteuersignal SE in Fig. 3 (B) als binäres Schaltsignal mit einem Signalwert 0 für den geschlossenen Zustand des Ventils und einem Signalwert 1 für den geöffneten Zustand des Ventils angenommen.

Im skizzierten Beispielsfall sei angenommen, dass bei Absinken des Fluiddrucks P in der Fluidkammer FK auf den unteren Schwellwert SU der Drucksensoranordnung DS das Sensorsignal SS auf den Signalwert 0 fällt und die Steuereinrichtung bei Auftreten eines Signalwerts 0 im Sensorsignal SS unmittelbar das Ventilsteuersignal SE auf den Signalwert 1 setzt und hierdurch das Eingangsventil EV den Verschlusskörper VK von der Ventilsitzfläche VS zurück zieht und die Einlassöffnung EO frei gibt. Durch die Einlassöffnung EO mit geringem Strömungswiderstand für das Fluid strömt Fluid aus der Fluidquelle FQ in die bereits mit Fluid auf dem Druck der unteren Druckschwelle SU gefüllte Fluidkammer FK. Aufgrund des gegenüber dem Strömungswiderstand der offenen Einlassöffnung EO größeren Strömungswiderstands der Auslassöffnung AO der Ringspaltdüse RS steigt der Druck in der Fluidkammer schnell an und erreicht bzw. überschreitet zum Zeitpunkt t2 die obere Druckschwelle SO. Die Drucksensoranordnung DS schaltet daraufhin das Sensorsignal SS auf den Signalwert 1 um, was in der Steuereinrichtung ST erfasst wird. Die Steuereinrichtung ST hält das Ventilsteuersignal SE noch für einen gegebenenfalls durch den Benutzer veränderlich vorgebbaren Zeitraum bis zu dem Zeitpunkt t3 auf dem Signalwert 1 entsprechend einer Beibehaltung der Öffnungsstellung des Einlassventils. Während der Zeitspanne von t2 nach t3 steigt der Fluiddruck in der Fluidkammer weiter an. Der Fluiddruck kann dabei den Maximaldruck PH erreichen oder auch unter diesem bleiben. Nach Ablauf der vorgegebenen Zeitspanne von t2 nach t3 schaltet die Steuereinrichtung ST das Ventilsteuersignal SE auf den Signalwert 0 und das Eingangsventil EV verschließt die Einlassöffnung EO, so dass kein weiteres Fluid aus der Fluidquelle FQ in die Fluidkammer FK nachströmen kann. Da die Auslassöffnung AO dauerhaft geöffnet ist, fließt weiter Fluid aus der Fluidkammer FK durch die Auslassöffnung AO ab und der Druck in der Fluidkammer sinkt ab dem Zeitpunkt t3 kontinuierlich ab. Zu einem Zeitpunkt t4 erreicht der Druck P des Fluids in der Fluidkammer FK den unteren Druckschwellwert SU und die Drucksensoranordnung schaltet das Sensorsignal SS um auf den Signalwert 0 und der geschilderte Ablauf wiederholt sich periodisch mit dem Zeitpunkt t4 der abgelaufenen Periode als neuem Zeitpunkt t1 der folgenden Periode.

An der Ausgangsöffnung AO ergibt sich ein weitgehend kontinuierlicher Abfluss von Fluid, wobei die Austrittsrate von Fluid aus der Auslassöffnung AO von der Druckdifferenz zwischen dem Fluiddruck P in der Fluidkammer FK und dem Minimaldruck außerhalb der Fluidkammer FK bei der Austrittsöffnung AO bestimmt ist und in erster Näherung als proportional zu der Druckdifferenz P - PL angesehen werden kann. In Anwendungen, in welchen kein kontinuierlicher Abfluss von Fluid durch die Ausgangsöffnung gefordert ist, kann auch die Schließdauer des Einlassventils so groß sein, dass über einen Teil der Schließzeit kein Fluid austritt.

Neben der Steuerung des Einlassventils EV über die Steuereinrichtung ST kann das Sensorsignal SS alternativ oder zusätzlich auch zur Funktionskontrolle der Dosiervorrichtung herangezogen werden, indem die Steuereinrichtung ST die Zeitspanne zwischen t1 und t2 und/oder die Zeitspanne zwischen t3 und t4 überwacht und mit Sollwerten vergleicht. Bei Toleranzvorgaben überschreitender Abweichung der genannten Zeitspannen von vorgebbaren Sollwerten und/oder auch von adaptiv gewonnenen Werten kann je nach Maß der Abweichung die Öffnungszeit des Einlassventils EV durch Veränderung der Zeitspanne t2 bis t3 variiert und/oder ein Fehlersignal generiert werden.

Die nicht abrupten Verläufe des ansteigenden Fluiddrucks in der Fluidkammer FK von t1 nach t3 und/oder des abfallenden Fluiddrucks von t3 nach t4 ergeben sich vorteilhafterweise durch ein geringes Maß an Volumenänderung der Fluidkammer FK in Abhängigkeit vom Fluiddruck P in der Fluidkammer FK. Insbesondere kann eine solche Volumenänderung dadurch gegeben sein, dass die dem Fluid in der Fluidkammer zu weisende Sensorfläche SF um ein geringes Maß nachgebend ausgeführt ist, so dass die Fluidmasse in der Fluidkammer zum Zeitpunkt t3 am größten und zu den Zeitpunkten t1, t4 am geringsten ist. Eine Volumenänderung der Fluidkammer FK kann auch durch andere bewegliche Begrenzungselemente der Fluidkammer einschließlich einer geringen Nachgiebigkeit des Gesamtgehäuses GE gegeben sein. Die Volumendifferenz zwischen dem Kammervolumen beim maximalen Druck zum Zeitpunkt t3 und minimalem Druck zu Zeitpunkten t1, t4 betrage vorteilhafterweise weniger als 1 mm³, insbesondere weniger als 0,5 mm³. Die Periodendauer liegt Vorteilhafterweise in einem Bereich zwischen 0,05 Sek. und 20 Sek.

Der zu Fig. 2 und Fig. 3 beschriebene periodische Arbeitsablauf der Dosiervorrichtung nach Fig. 1 kann auf unterschiedliche Weise an die jeweiligen Bedürfnisse angepaßt und modifiziert werden. Insbesondere kann die Steuereinrichtung ST als eine elektronische, programmierbare Steuereinrichtung ausgebildet sein, so dass durch unterschiedliche Ablaufprogramme unterschiedliche Arbeitsabläufe der Dosiervorrichtung eingestellt werden können. Beispielsweise kann vorgesehen sein, dass die Steuereinrichtung bereits bei Erreichen der oberen Druckschwelle SO zum Zeitpunkt t2 das Einlassventil EV schließt und somit die Zeitspanne t2 nach t3 entfällt und t3 mit t2 zusammenfällt. Es kann auch vorgesehen sein, dass die Steuereinrichtung ST bei Erreichen des unteren Schwellwerts SU durch den Fluiddruck P in der Fluidkammer FK das Einlassventil noch für eine vorgebbare Zeitspanne geschlossen hält und somit der Fluiddruck in der Fluidkammer auch unter dem unteren Schwellwert SU absinken kann. Der Fluiddruck in der Fluidkammer kann dabei auch im wesentlichen den unteren Druckwert PL erreichen, so dass für eine begrenzte Zeit bis zum erneuten Öffnen des Einlassventils der Strom von Fluid durch die Ausgangsöffnung AO unterbrochen ist.

In Fig. 1 ist mit unterbrochener Linie angedeutet, dass neben dem Strömungsweg von der Fluidquelle FQ in die Fluidkammer FK durch die Einlassöffnung EO auch ein dauerhaft offener Bypass-Strömungspfad BP vorgesehen sein kann, dessen Strömungswiderstand größer ist als der Strömungswiderstand der Auslassöffnung AO. Hierdurch wird der minimal in der Fluidkammer FK herrschende Fluiddruck dauerhaft über dem außerhalb der Fluidkammer bei der Auslassöffnung AO herrschenden Außendruck gehalten und zusätzlich durch Öffnen und Schließen des Einlassventils der Fluiddruck P oberhalb eines solchen Minimaldrucks variiert. Hierdurch kann beispielsweise erreicht werden, dass auch bei einem Defekt des Einlassventils EV oder der Steuereinrichtung ST in der Art, dass das Einlassventil EV immer noch eine Mindestflussrate an Fluid aus der Austrittsöffnung AO austritt und eine Art Notschmierung bildet. Zugleich kann die tatsächlich für die optimale Schmierung einer Schmierstelle gewünschte, über die Perioden der periodischen Arbeitsvorgänge gemittelte Schmiermittelrate bei ordnungsgemäßer Funktion der Dosiervorrichtung präzise und auch auf sehr kleine Schmiermittelraten eingestellt werden.

Von der Fluidkammer FK können auch mehrere Auslassöffnungen wegführen, welche dann vorzugsweise zur separaten Schmierung unterschiedlicher Schmierstellen dienen können.

Die Drucksensoranordnung DS enthält in bevorzugter Ausführung einen Piezo-Drucksensor. Die Drucksensoranordnung DS kann insbesondere abweichend von der Darstellung des Sensorsignals SS nach Fig. 3 (A) auch so ausgebildet sein, dass der Steuereinrichtung ST ein über den Messbereich feiner aufgelöstes Sensorsignal SS zur Verfügung steht. Das Sensorsignal SS kann dabei ein digitales oder ein analoges Signal sein. Bei feiner aufgelöstem Sensorsignal SS kann eine Schwellwertüberwachung, insbesondere mit auf einfache Weise veränderbaren Schwellwertvorgaben, in der Steuereinrichtung ST vorgenommen werden.

Die vorstehend und die in den Ansprüchen angegebenen sowie die den Abbildungen entnehmbaren Merkmale sind sowohl einzeln als auch in verschiedener Kombination vorteilhaft realisierbar.

## Patentansprüche

1. Vorrichtung zur dosierten Abgabe eines Fluids, insbesondere eines Schmiermittels in einem Schmiersystem für eine Lageranordnung oder für ein Werkzeug mit einer Fluidkammer (FK), welche selbst keine aktiven Pumpelemente enthält und aus welcher Fluid über wenigstens eine Ausgangsöffnung (AO) in eine Fluidsenke mit niedrigem Druck ableitbar ist, sowie mit einer der Fluidkammer (FK) zugeordneten Drucksensoranordnung (DS), welche ein Drucksensorsignal (SS) erzeugt und einer Steuereinrichtung (ST) zuleitet, **dadurch gekennzeichnet dass** in die Vorrichtung über eine Einlassöffnung (EO) eines durch die Steuereinrichtung (ST) zwischen einer Öffnungsstellung und einer Schließstellung periodisch umgeschalteten Einlassventils (EV) Fluid aus einer Fluidquelle (FQ) mit hohem Druck einleitbar ist und dass die Ausgangsöffnung (AO) permanent geöffnet ist und für das Fluid einen Strömungswiderstand aufweist, welcher größer ist als der Strömungswiderstand der Einlassöffnung (FO) in deren Öffnungsstellung.

2. Vorrichtung nach Anspruch 1, **dadurch gekennzeichnet, dass** der Strömungswiderstand der Ausgangsöffnung (AO) wenigstens das 2-fache, vorzugsweise wenigstens das 4-fache des Strömungswiderstands der Einlassöffnung (EO) des Einlassventils (EV) in dessen Öffnungsstellung beträgt.

3. Vorrichtung nach Anspruch 1 oder 2, **dadurch gekennzeichnet, dass** das Einlassventil (EV) in der Schließstellung die Fluidverbindung zwischen der Fluidquelle (FQ) und der Fluidkammer (FK) vollständig sperrt.

4. Vorrichtung nach Anspruch 1 oder 2, **dadurch gekennzeichnet, dass** in der Schließstellung des Einlassventils zwischen der Fluidquelle (FQ) und der Fluidkammer (FK) eine Bypass-Fluidverbindung (BP) verbleibt, wobei der Strömungswiderstand der Bypass-Fluidverbindung (BP) vorzugsweise größer ist als der Strömungswiderstand der Ausgangsöffnung (AO).

5. Vorrichtung nach einem der Ansprüche 1 bis 4, **dadurch gekennzeichnet, dass** die Steuereinrichtung (ST) die Umschaltung des Einlassventils (EV) nach Maßgabe des Drucksensorsignals (SS) veränderbar steuert.

6. Vorrichtung nach einem der Ansprüche 1 bis 5, **dadurch gekennzeichnet, dass** die Drucksensoranordnung (DS) zur Überwachung einer oberen Druckschwelle (SO) eingerichtet ist, wobei die Steuereinrichtung (ST) vorzugsweise das Einlassventil (EV) in vorgebbarer erster zeitlicher Zuordnung (t3 - t2) zum Überschreiten der oberen Druckschwelle (SO) schließt.

7. Vorrichtung nach einem der Ansprüche 1 bis 6, **dadurch gekennzeichnet, dass** die Drucksensoranordnung (DS) zur Überwachung einer unteren Druckschwelle (SU) eingerichtet ist, wobei die Steuereinrichtung (ST) vorzugsweise das Einlassventil (EV) in vorgebbarer zweiter zeitlicher Zuordnung (ZU) zum Unterschreiten der unteren Druckschwelle (SU) öffnet.

8. Vorrichtung nach einem der Ansprüche 1 bis 7, **dadurch gekennzeichnet, dass** die Drucksensoranordnung (DS) zur Ermittlung von mehr als zwei verschiedenen Druckwerten eingerichtet ist.

9. Vorrichtung nach einem der Ansprüche 1 bis 8, **dadurch gekennzeichnet, dass** die Drucksensoranordnung (DS) und/oder die Steuereinrichtung (ST) zur Auswertung von Zeitverläufen des Fluiddrucks (P) in der Fluidkammer (FK) eingerichtet sind.

10. Vorrichtung nach einem der Ansprüche 1 bis 9, **dadurch gekennzeichnet, dass** das Kammervolumen der Fluidkammer (FK) passiv druckabhängig veränderbar ist.

11. Vorrichtung nach Anspruch 10, **dadurch gekennzeichnet, dass** die maximale Veränderbarkeit des Kammervolumens der Fluidkammer (FK) zwischen Öffnungsstellung und Schließstellung des Einlassventils (EV) weniger als 1 %, insbesondere weniger als 0,5 %, vorzugsweise weniger als 0,1 % beträgt.

12. Vorrichtung nach Anspruch 10 oder 11, **dadurch gekennzeichnet, dass** die Veränderbarkeit des Kammervolumens zumindest überwiegend durch eine druckabhängige Verlagerung einer dem Fluid zu weisenden Fläche (SF) der Drucksensoranordnung (DS) gegeben ist.

13. Vorrichtung nach einem der Ansprüche 1 bis 12, **dadurch gekennzeichnet, dass** die Ausgangsöffnung (AO) durch eine Ringspaltdüse (RS) gebildet ist.

14. Vorrichtung nach einem der Ansprüche 1 bis 13, **dadurch gekennzeichnet, dass** von der Fluidkammer (FK) mehrere Ausgangsöffnungen zu getrennten Fluidsenken führen.

15. Verfahren zur dosierten Zuführung von Schmiermittel in einer Öl-Luft-Schmiereinrichtung unter Verwendung einer Vorrichtung nach einem der Ansprüche 1 bis 14, wobei durch die Ausgangsöffnung (AO) der Fluidkammer (FK) austretendes Fluid in eine zu einer Schmierstelle führende. Luftführung geleitet wird.

## Claims

1. Apparatus for the metered dispensing of a fluid, in particular a lubricant in a lubrication system for a bearing arrangement or for a tool, having a fluid chamber (FK) which does not itself contain an active pump element and from which fluid is drainable at low pressure via at least one outlet opening (AO) into a fluid depression, and having a pressure sensor arrangement (DS) assigned to the fluid chamber (FK), said pressure sensor arrangement (DS) generating a pressure sensor signal (SS) and sending it to a control device (ST), **characterized in that** fluid from a fluid source (FQ) is introducible at high pressure into the apparatus via an inlet opening (EO) of an inlet valve (EV) that is periodically switched over between an open position and a closed position by the control device (ST), and **in that** the outlet opening (AO) is permanently open and exhibits flow resistance for the fluid, said flow resistance being greater than the flow resistance of the inlet opening (FO) in the open position thereof.

2. Apparatus according to Claim 1, **characterized in that** the flow resistance of the outlet opening (AO) is at least twice, preferably at least four times the flow resistance of the inlet opening (EO) of the inlet valve (EV) in the open position thereof.

3. Apparatus according to Claim 1 or 2, **characterized in that**, in the closed position, the inlet valve (EV) completely blocks the fluid connection between the fluid source (FQ) and the fluid chamber (FK).

4. Apparatus according to Claim 1 or 2, **characterized in that**, in the closed position of the inlet valve, a bypass fluid connection (BP) remains between the fluid source (FQ) and the fluid chamber (FK), wherein the flow resistance of the bypass fluid connection.(BP) is preferably greater than the flow resistance of the outlet opening (AO).

5. Apparatus according to one of Claims 1 to 4, **characterized in that** the control device (ST) controls the switching over of the inlet valve (EV) in a variable manner in accordance with the pressure sensor signal (SS).

6. Apparatus according to one of Claims 1 to 5, **characterized in that** the pressure sensor arrangement (DS) is set up to monitor an upper pressure threshold (SO), wherein the control device (ST) preferably closes the inlet valve (EV) in a predefinable first temporal assignment (t3-t2) to the exceeding of the upper pressure threshold (SO).

7. Apparatus according to one of Claims 1 to 6, **characterized in that** the pressure sensor arrangement (DS) is set up to monitor a lower pressure threshold (SU), wherein the control device (ST) preferably opens the inlet valve (EV) in a predefinable second temporal assignment (ZU) to the dropping below of the lower pressure threshold (SU).

8. Apparatus according to one of Claims 1 to 7, **characterized in that** the pressure sensor arrangement (DS) is set up to determine more than two different pressure values.

9. Apparatus according to one of Claims 1 to 8, **characterized in that** the pressure sensor arrangement (DS) and/or the control device (ST) is/are set up to evaluate the temporal profiles of the fluid pressure (P) in the fluid chamber (FK).

10. Apparatus according to one of Claims 1 to 9, **characterized in that** the chamber volume of the fluid chamber (FK) is variable passively in a pressure-dependent manner.

11. Apparatus according to Claim 10, **characterized in that** the maximum variability of the chamber volume of the fluid chamber (FK) between the open position and closed position of the inlet valve (EV) is less than 1%, in particular less than 0.5%, preferably less than 0.1%.

12. Apparatus according to Claim 10 or 11, **characterized in that** the variability of the chamber volume is given at least predominantly by a pressure-dependent displacement of a surface (SF), facing the fluid, of the pressure sensor arrangement (DS).

13. Apparatus according to one of Claims 1 to 12, **characterized in that** the outlet opening (AO) is formed by an annular gap nozzle (RS).

14. Apparatus according to one of Claims 1 to 13, **characterized in that** a plurality of outlet openings lead to separate fluid depressions from the fluid chamber (FK).

15. Method for the metered feeding of lubricant in an oil-air lubrication device using an apparatus according to one of Claims 1 to 14, wherein fluid emerging through the outlet opening (AO) of the fluid chamber (FK) is passed into an air duct leading to a lubrication point.

## Revendications

1. Dispositif de distribution dosée d'un fluide, notamment d'un lubrifiant dans un système de lubrifiant pour un dispositif de palier ou pour un outil comportant une chambre de fluide (FK), qui ne contient lui-même pas d'éléments de pompage actifs et hors duquel le fluide peut être dévié par l'intermédiaire d'au moins une ouverture de sortie (AO) vers un puits de fluide avec une pression plus basse, ainsi qu'un dispositif de capteur de pression (DS) coordonné à la chambre de fluide (FK), qui génère un signal de capteur de pression (SS) et dirige un dispositif de commande (ST), **caractérisé en ce que** dans le dispositif par l'intermédiaire d'une ouverture d'admission (EO) d'une soupape d'admission (EV) commutée périodiquement par l'intermédiaire du dispositif de commande (ST) entre une position d'ouverture et une position de fermeture, du fluide peut être introduit avec une haute pression à partir d'une source de fluide (FQ) et **en ce que** l'ouverture de sortie (AO) est ouverte en permanence et présente une résistance à l'écoulement pour le fluide, qui est supérieure à la résistance à l'écoulement de l'ouverture d'admission (FO) dans la position d'ouverture de cette dernière.

2. Dispositif selon la revendication 1, **caractérisé en ce que** la résistance à l'écoulement de l'ouverture de sortie (AO) s'élève au moins au double, de préférence au moins au quadruple de la résistance à l'écoulement de l'ouverture d'admission (EO) de la soupape d'admission (EV) dans la position d'ouverture de cette dernière.

3. Dispositif selon la revendication 1 ou 2, **caractérisé en ce que** la soupape d'admission (EV) dans la position de fermeture bloque complètement la liaison de fluide entre la source de fluide (FQ) et la chambre de fluide (FK).

4. Dispositif selon la revendication 1 ou 2, **caractérisé en ce que** dans la position de fermeture de la soupape d'admission entre la source de fluide (FQ) et la chambre de fluide (FK) une liaison de dérivation de fluide (BP) subsiste, dans lequel la résistance à l'écoulement de la liaison de dérivation de fluide (BP) est de préférence plus grande que la résistance à l'écoulement de l'ouverture de sortie (AO).

5. Dispositif selon une des revendications 1 à 4, **caractérisé en ce que** le dispositif de commande (ST) commande de manière variable la commutation de la soupape d'admission (EV) conformément au signal de capteur de pression (SS).

6. Dispositif selon une des revendications 1 à 5, **caractérisé en ce que** le dispositif de capteur de pression (DS) est conçu afin de surveiller un seuil de pression supérieur (SO), dans lequel le dispositif de commande (ST) ferme de préférence la soupape d'admission (EV) dans une première séquence temporelle prescrite (t3-t2) pour dépasser le seuil de pression supérieur (SO).

7. Dispositif selon une des revendications 1 à 6, **caractérisé en ce que** le dispositif de capteur de pression (DS) est conçu afin de surveiller un seuil de pression inférieur (SU), dans lequel le dispositif de commande (ST) ouvre de préférence la soupape d'admission (EV) dans une seconde séquence temporelle prescrite (ZU) pour sous-dépasser le seuil de pression inférieur (SU).

8. Dispositif selon une des revendications 1 à 7, **caractérisé en ce que** le dispositif de capteur de pression (DS) est conçu afin de déterminer plus de deux valeurs de pression différentes.

9. Dispositif selon une des revendications 1 à 8, caractérisé e ce que le dispositif de capteur de pression (DS) et/ou le dispositif de commande (ST) sont conçus afin d'évaluer les cours temporels de la pression de fluide (P) dans la chambre de fluide (FK).

10. Dispositif selon une des revendications 1 à 9, **caractérisé en ce que** le volume de chambre de la chambre de fluide (FK) peut être varié passivement en fonction de la pression.

11. Dispositif selon la revendication 10, **caractérisé en ce que** la faculté de variation maximale du volume de chambre de la chambre de fluide (FK) entre la position d'ouverture et la position de fermeture de la soupape d'admission (EV) est inférieur à 1%, notamment inférieur à 0,5 %, de préférence inférieur à 0,1 %.

12. Dispositif selon la revendication 10 ou 11, **caractérisé en ce que** la faculté de variation du volume de chambre est induite au moins essentiellement par un déport dépendant de la pression d'une surface (SF) du dispositif de capteur de pression (DS) tournée vers le fluide.

13. Dispositif selon une des revendications 1 à 12, **caractérisé en ce que** l'ouverture de sortie (AO) est formée par une buse à fente annulaire (RS).

14. Dispositif selon une des revendications 1 à 13, **caractérisé en ce que** à partir de la chambre de fluide (FK) plusieurs ouvertures de sortie mènent à des puits de fluide séparés.

15. Dispositif de distribution dosée de lubrifiant dans un dispositif de lubrification huile-air en utilisant un dispositif selon une des revendications 1 à 14, dans lequel le fluide sortant de la chambre de fluide (FK) à travers l'ouverture de sortie (AO) est guidé dans un conduit d'air menant à un emplacement de lubrification.
